# EUROPEAN PATENT APPLICATION

(11) **EP 4 821 711 A1**
(43) Date of publication of application: **14.10.2026**
(21) Application number: 25850107.1
(22) Date of filing: 28.05.2025
(51) Int. Cl.: B60G 17/016, B60G 17/015

(54) **VEHICLE CONTROL METHOD AND DEVICE, VEHICLE, AND STORAGE MEDIUM**

(30) Priority: 08.08.2024 CN 202411089758
(71) Applicant: Chongqing Changan Technology Co., Ltd., Chongqing 401135 (CN)
(72) Inventor: CAO, Xiaoning, Chongqing 401135 (CN); CHEN, Changyou, Chongqing 401135 (CN); DENG, Peng, Chongqing 401135 (CN); WANG, Qixiang, Chongqing 401135 (CN); WANG, Siyong, Chongqing 401135 (CN)
(74) Representative: Skov, Anders
(86) International application number: PCT/CN2025/097801
(87) International publication number: WO 2026/031738

(57) **Abstract**

A vehicle control method, comprising: acquiring suspension real-time response information for a suspension of a vehicle; when it is determined on the basis of the suspension real-time response information that a current driving working condition of the vehicle is a pulse excitation working condition, determining a pulse excitation scenario for the pulse excitation working condition; and determining a damping control mode of an electrically controlled shock absorber having continuously-adjustable damping in the pulse excitation scenario, and controlling said electrically controlled shock absorber by means of the damping control mode. Also disclosed are a corresponding control device, a vehicle and a storage medium. The control method realizes generation of corresponding control policies for different pulse excitation scenarios to control an electronically controlled shock absorber having continuously-adjustable damping, thereby improving the control efficiency for the shock absorber.

## Description

### CROSS-REFERENCE TO RELATED APPLICATIONS

The present application is an international patent application based on Chinese Patent Application No. 202411089758.7, filed on August 8, 2024, which is incorporated herein by reference in its entirety.

### TECHNICAL FIELD

The present disclosure relates to the technical field of vehicle shock absorption control, and specifically, to a method for controlling a vehicle, a device for controlling a vehicle, a vehicle, and a computer-readable storage medium.

### BACKGROUND OF THE INVENTION

Vertical movement of a vehicle may occur while the vehicle is traveling. For example, to control vehicle speed in urban areas, provision of speed bumps on road sections with high pedestrian and vehicle traffic, especially near schools, squares, and intersections, is necessary. For another example, potholes, manhole covers, etc., are inevitable on roads. When a vehicle travels over potholes, manhole covers, etc., the vertical movement of the vehicle may occur, which may cause discomfort to occupants in the vehicle, or in severe cases, may result in safety accidents to the occupants.

### SUMMARY OF THE INVENTION

A first objective of the present disclosure is to provide a method for controlling a vehicle to address a problem of low efficiency in vehicle shock absorption control in the related art. A second objective of the present disclosure is to provide a device for controlling a vehicle. A third objective of the present disclosure is to provide a vehicle. A fourth objective of the present disclosure is to provide a computer-readable storage medium.

To achieve the above objectives, the present disclosure adopts the following technical solutions.

A method for controlling a vehicle is provided, where the vehicle is equipped with an electronically controlled shock absorber having continuously-adjustable damping. The method for controlling the vehicle includes:
acquiring real-time suspension response information for a suspension of the vehicle;
determining a pulse excitation scenario for a pulse excitation condition in a case where a current traveling condition of the vehicle is determined to be the pulse excitation condition based on the real-time suspension response information; and
determining a damping control mode of the electronically controlled shock absorber having continuously-adjustable damping in the pulse excitation scenario, and controlling the electronically controlled shock absorber having continuously-adjustable damping through the damping control mode.

Further, the vehicle is equipped with a vehicle self-perception system and a domain controller, where the vehicle self-perception system includes a suspension height sensor and a vehicle body acceleration sensing device, and the electronically controlled shock absorber having continuously-adjustable damping includes an unsprung mass structural member; and acquiring the real-time suspension response information for the suspension of the vehicle includes:
acquiring an actual suspension travel change value for the electronically controlled shock absorber having continuously-adjustable damping through the suspension height sensor;
acquiring an unsprung mass acceleration of the unsprung mass structural member through the vehicle body acceleration sensing device; and
determining the actual suspension travel change value and the unsprung mass acceleration as the real-time suspension response information, and transmitting the real-time suspension response information to the domain controller.

Further, determining the pulse excitation scenario for the pulse excitation condition in a case where the current traveling condition of the vehicle is determined to be the pulse excitation condition based on the real-time suspension response information includes:
determining the pulse excitation scenario for the pulse excitation condition, in a case where the domain controller determines that the unsprung mass acceleration is greater than a preset unsprung mass acceleration characteristic threshold, and that an absolute value of the actual suspension travel change value is greater than a preset suspension height characteristic threshold within a preset time threshold range.

Further, the pulse excitation scenario includes a vehicle front axle incline traveling phase, a vehicle front axle residual vibration phase, a vehicle rear axle incline traveling phase, and a vehicle rear axle residual vibration phase; and determining the damping control mode of the electronically controlled shock absorber having continuously-adjustable damping in the pulse excitation scenario includes:
determining a first target damping control mode of the electronically controlled shock absorber having continuously-adjustable damping in the vehicle front axle incline traveling phase;
determining a second target damping control mode of the electronically controlled shock absorber having continuously-adjustable damping in the vehicle front axle residual vibration phase;
determining a third target damping control mode of the electronically controlled shock absorber having continuously-adjustable damping in the vehicle rear axle incline traveling phase; and
determining a fourth target damping control mode of the electronically controlled shock absorber having continuously-adjustable damping in the vehicle rear axle residual vibration phase.

Further, determining the first target damping control mode of the electronically controlled shock absorber having continuously-adjustable damping in the vehicle front axle incline traveling phase includes:
acquiring a first target moment at which a front axle of the vehicle enters the vehicle front axle incline traveling phase, and a second target moment at which the vehicle is identified as being in the vehicle front axle incline traveling phase; and
determining the first target damping control mode as a normal road surface damping mode for both the front axle and a rear axle of the vehicle from the first target moment to the second target moment.

Further, determining the second target damping control mode of the electronically controlled shock absorber having continuously-adjustable damping in the vehicle front axle residual vibration phase includes:
acquiring a second target moment at which the vehicle is identified as being in the vehicle front axle incline traveling phase; and
determining the second target damping control mode as a hard damping mode for a front axle of the vehicle and an auxiliary damping mode for a rear axle of the vehicle from the second target moment.

Further, determining the third target damping control mode of the electronically controlled shock absorber having continuously-adjustable damping in the vehicle rear axle incline traveling phase includes:
acquiring a first target moment at which a front axle of the vehicle enters the vehicle front axle incline traveling phase;
acquiring vehicle traveling state information of the vehicle from the first target moment as a starting point;
determining a first travel distance of the vehicle from the first target moment based on the vehicle traveling state information; and
determining the third target damping control mode as a soft damping mode for a rear axle of the vehicle in a case where a difference between the first travel distance and a wheelbase of the vehicle is less than a preset distance threshold.

Further, determining the fourth target damping control mode of the electronically controlled shock absorber having continuously-adjustable damping in the vehicle rear axle residual vibration phase includes:
acquiring a second target moment at which the vehicle is identified as being in the vehicle front axle incline traveling phase;
determining a second travel distance of the vehicle from the first target moment to the second target moment based on the vehicle traveling state information;
determining a developed length of a pulse excitation profile through the second travel distance;
determining a third travel distance of the vehicle based on the vehicle traveling state information in a case where a difference between the first travel distance and a wheelbase of the vehicle is less than a preset distance threshold; and
determining the fourth target damping control mode as a hard damping mode for a rear axle of the vehicle in a case where the third travel distance is equal to a preset ratio of the developed length of the pulse excitation profile.

Further, the method for controlling the vehicle further includes:
acquiring an activation duration of the rear axle of the vehicle in the hard damping mode; and
determining the damping control mode of the electronically controlled shock absorber having continuously-adjustable damping as a normal road surface damping mode for both the front axle and the rear axle of the vehicle, in a case where the activation duration exceeds a preset duration threshold.

A device for controlling a vehicle is provided, where the vehicle is equipped with an electronically controlled shock absorber having continuously-adjustable damping. The device for controlling the vehicle includes:
a real-time suspension response information acquisition module configured to acquire real-time suspension response information for a suspension of the vehicle;
a pulse excitation scenario determination module configured to determine a pulse excitation scenario for a pulse excitation condition in a case where a current traveling condition of the vehicle is determined to be the pulse excitation condition based on the real-time suspension response information; and
a damping control mode determination module configured to determine a damping control mode of the electronically controlled shock absorber having continuously-adjustable damping in the pulse excitation scenario, and to control the electronically controlled shock absorber having continuously-adjustable damping through the damping control mode.

A vehicle is provided. The vehicle includes:
one or more processors; and
one or more machine-readable media storing instructions thereon, where the instructions, when executed by the one or more processors, cause the vehicle to perform one or more of the methods described in the present disclosure.

A computer-readable storage medium is provided. The computer-readable storage medium stores instructions thereon, where the instructions, when executed by one or more processors, cause the processors to perform the method according to embodiments of the present disclosure.

The present disclosure has the following beneficial effects.

According to embodiments of the present disclosure, the real-time suspension response information for the suspension of the vehicle is acquired; in a case where the current traveling condition of the vehicle is determined to be the pulse excitation condition based on the real-time suspension response information, the pulse excitation scenario for the pulse excitation condition is determined; the damping control mode of the electronically controlled shock absorber having continuously-adjustable damping in the pulse excitation scenario is determined, and the electronically controlled shock absorber having continuously-adjustable damping is controlled through the damping control mode. In this manner, corresponding control strategies for different pulse excitation scenarios are generated to control the electronically controlled shock absorber having continuously-adjustable damping, thereby improving the control efficiency for the shock absorber.

### BRIEF DESCRIPTION OF DRAWINGS

FIG. 1 is a flowchart of a method for controlling a vehicle according to an embodiment of the present disclosure.
FIG. 2 is a schematic architecture diagram of a shock absorber control system according to an embodiment of the present disclosure.
FIG. 3 is a diagram illustrating segmented phases during vehicle travel according to an embodiment of the present disclosure.
FIG. 4 is a schematic flowchart of a method for controlling a vehicle according to an embodiment of the present disclosure.
FIG. 5 is a schematic diagram of a pulse excitation scenario identification flag according to an embodiment of the present disclosure.
FIG. 6 is a diagram illustrating moments of a vehicle traveling over an excited road surface and triggering of shock absorber modes according to an embodiment of the present disclosure.
FIG. 7 is a block diagram of a structure of a device for controlling a vehicle according to an embodiment of the present disclosure.

### DETAILED DESCRIPTION OF THE INVENTION

The embodiments of the present disclosure are described below with reference to the accompanying drawings and preferred embodiments. Those skilled in the art can easily understand other benefits and effects of the present disclosure from the disclosure in this specification. The present disclosure can also be implemented or applied through other embodiments. Various details in this specification can be modified or altered from different perspectives and applications without departing from the spirit of the present disclosure. It is to be understood that the preferred embodiments are provided merely to illustrate the present disclosure and are not intended to limit the scope of protection of the present disclosure.

It is to be noted that the illustrations provided in the following embodiments are merely schematic representations to explain the basic concept of the present disclosure. Therefore, merely components related to the present disclosure are shown, rather than the actual quantity, shape, and size of the components. In practical implementation, the form, quantity, and proportions of each component can be arbitrarily changed, and the layout configuration of the components may also be more complex.

In a specific implementation, to control vehicle speed in urban areas, provision of speed bumps on road sections with high pedestrian and vehicle traffic, especially near schools, squares, and intersections, is necessary. In addition, potholes, manhole covers, etc., are inevitable on roads. When a vehicle travels over potholes, manhole covers, etc., the vertical movement of the vehicle may occur, which may cause discomfort to occupants in the vehicle, or in severe cases, may result in safety accidents to the occupants.

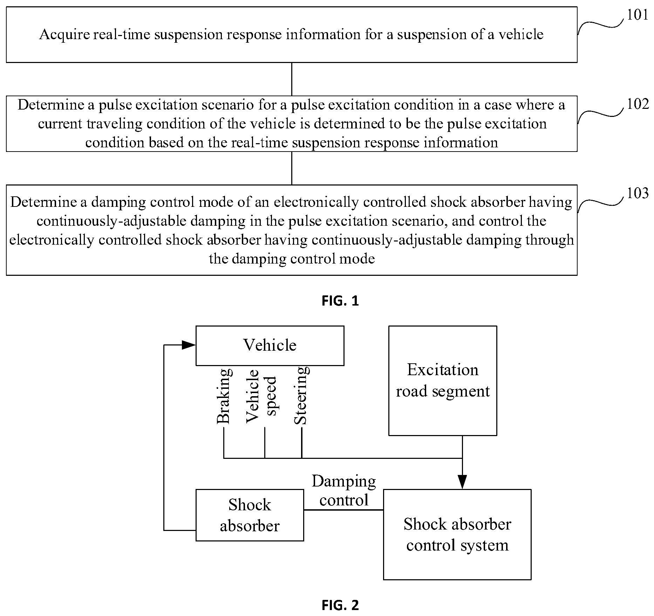

FIG. 1 is a flowchart of a method for controlling a vehicle according to an embodiment of the present disclosure. The method for controlling the vehicle includes steps 101 to 103.

In step 101, real-time suspension response information for a suspension of the vehicle is acquired.

In step 102, a pulse excitation scenario for a pulse excitation condition is determined in a case where a current traveling condition of the vehicle is determined to be the pulse excitation condition based on the real-time suspension response information.

In step 103, a damping control mode of an electronically controlled shock absorber having continuously-adjustable damping in the pulse excitation scenario is determined, and the electronically controlled shock absorber having continuously-adjustable damping is controlled through the damping control mode.

An electronically controlled damping controller (ECDC), also referred to as an electronically controlled shock absorber having continuously-adjustable damping, is a shock absorber that adjusts damping characteristics by electronic control technologies. Compared with traditional mechanical or hydraulic shock absorbers, the ECDC exhibits the following benefits:
Fast response: The ECDC can adjust damping in real time according to road conditions, providing a fast response and effectively suppressing vehicle body vibrations.
High control precision: The ECDC can finely adjust damping through an electronic control system, achieving more precise control effects.
Versatile functionality: The ECDC can implement a plurality of functions, such as a comfort mode, a sport mode, an off-road mode, and others, meeting different driving requirements.

Referring to FIG. 2, FIG. 2 is a schematic architecture diagram of a shock absorber control system according to an embodiment of the present disclosure.

The embodiments of the present disclosure can be applied to a vehicle, where the vehicle is configured with a shock absorber control system. The shock absorber control system can include a vehicle self-perception system, a vehicle state acquisition module, a domain controller, and a semi-active shock absorber including an electronically controlled shock absorber having continuously-adjustable damping.

The embodiments of the present disclosure can acquire real-time suspension response information for a suspension of the vehicle through the vehicle self-perception system. The real-time suspension response information can be information for providing feedback on suspension operating conditions. For example, the real-time suspension response information can include an actual suspension travel change value, a sprung mass acceleration, an unsprung mass acceleration, and the like.

After the vehicle self-perception system acquires the real-time suspension response information for the suspension of the vehicle, the real-time suspension response information can be transmitted to the domain controller. Upon obtaining the real-time suspension response information for the suspension of the vehicle, the domain controller can determine, based on the real-time suspension response information, whether a current traveling condition of the vehicle is a pulse excitation condition.

The domain controller is configured with a program such that, in a case where the current traveling condition of the vehicle is determined to be the pulse excitation condition based on the real-time suspension response information, a pulse excitation scenario for the pulse excitation condition can be determined according to special characteristics presented in a case where the vehicle travels over the pulse excitation scenario. For example, the pulse excitation scenario can include a vehicle front axle incline traveling phase, a vehicle front axle residual vibration phase, a vehicle rear axle incline traveling phase, a vehicle rear axle residual vibration phase, and the like.

For different pulse excitation scenarios, the embodiments of the present disclosure can determine a damping control mode of the electronically controlled shock absorber having continuously-adjustable damping in the pulse excitation scenario, thereby generating corresponding control strategies to control the electronically controlled shock absorber having continuously-adjustable damping in a targeted manner for different pulse excitation scenarios.

According to embodiments of the present disclosure, the real-time suspension response information for the suspension of the vehicle is acquired; in a case where the current traveling condition of the vehicle is determined to be the pulse excitation condition based on the real-time suspension response information, the pulse excitation scenario for the pulse excitation condition is determined; the damping control mode of the electronically controlled shock absorber having continuously-adjustable damping in the pulse excitation scenario is determined, and the electronically controlled shock absorber having continuously-adjustable damping is controlled through the damping control mode. In this manner, corresponding control strategies for different pulse excitation scenarios are generated to control the electronically controlled shock absorber having continuously-adjustable damping, thereby improving the control efficiency for the shock absorber.

Based on the above embodiments, variant embodiments of the above embodiments are proposed. It is to be noted that, for brevity, merely differences from the above embodiments are described in the variant embodiments.

The electronically controlled shock absorber having continuously-adjustable damping includes a variable damping shock absorber, a sprung mass structural member, a suspension spring, and an unsprung mass structural member;
the sprung mass structural member is positioned above the suspension spring;
the unsprung mass structural member is positioned below the suspension spring;
the sprung mass structural member is connected to the unsprung mass structural member by the suspension spring;
the variable damping shock absorber is disposed between the sprung mass structural member and the unsprung mass structural member; and
the unsprung mass structural member is connected to a wheel of the vehicle.

The vehicle is equipped with a vehicle self-perception system and a domain controller, where the vehicle self-perception system includes a suspension height sensor and a vehicle body acceleration sensing device; and acquiring the real-time suspension response information for the suspension of the vehicle includes:
acquiring an actual suspension travel change value for the electronically controlled shock absorber having continuously-adjustable damping through the suspension height sensor;
acquiring an unsprung mass acceleration of the unsprung mass structural member through the vehicle body acceleration sensing device; and
determining the actual suspension travel change value and the unsprung mass acceleration as the real-time suspension response information, and transmitting the real-time suspension response information to the domain controller.

In an implementation, the electronically controlled shock absorber having continuously-adjustable damping includes a variable damping shock absorber, a sprung mass structural member, a suspension spring, and an unsprung mass structural member;
the sprung mass structural member is positioned above the suspension spring;
the unsprung mass structural member is positioned below the suspension spring;
the sprung mass structural member is connected to the unsprung mass structural member by the suspension spring, where a stiffness of the suspension spring is k;
the variable damping shock absorber is disposed between the sprung mass structural member and the unsprung mass structural member, where a damping of the variable damping shock absorber is c(t); and
the unsprung mass structural member is connected to a wheel of the vehicle, where the wheel is considered as an elastic element with a stiffness of kₜ, and the wheel is in contact with the ground.

The suspension height sensor, also referred to as a vehicle body height sensor, is configured to measure a distance between the vehicle body and the axle, namely the suspension height. A signal of the suspension height sensor can be used for the following purposes:
Automatic vehicle body height adjustment: In vehicles equipped with an air suspension or a hydraulic suspension, the suspension height sensor can provide a feedback signal to control a suspension system to automatically adjust the vehicle body height, thereby maintaining the vehicle level or adjusting the vehicle body height according to different traveling conditions.
Brake light force adjustment: In some vehicles, the signal of the suspension height sensor can be configured to adjust brake light force. In a case where the vehicle is fully loaded or towing a heavy object, the brake light force is correspondingly increased to enhance braking effect.
Prevention of vehicle bottoming: In some off-road vehicles, the suspension height sensor can monitor the vehicle body height and provide a warning to the driver in a case where the vehicle body height is too low, thereby preventing the vehicle from bottoming.

The vehicle body acceleration sensor, also referred to as a longitudinal acceleration sensor or a vertical acceleration sensor, is configured to measure an acceleration of the vehicle body in a vertical direction. The signal of the vehicle body acceleration sensor can be used for the following purposes:
Road condition identification: By analyzing the vehicle body acceleration signal, types of road conditions can be identified, such as uneven or bumpy surfaces, and suspension damping or other control strategies can be adjusted according to the road conditions.
Electronic stability control (ESC) system: The vehicle body acceleration sensor is one of the key sensors of the ESC system, which provides lateral and longitudinal acceleration information of the vehicle for detecting vehicle loss-of-control risks and performing intervention measures, such as braking specific wheels or reducing engine torque.
Traction control system (TCS): The vehicle body acceleration sensor can monitor wheel slip and provide feedback to the TCS system, and the feedback is configured to control engine torque or brake slipping wheels so as to prevent vehicle traction loss.

In an implementation, the vehicle self-perception system includes a suspension height sensor and a vehicle body acceleration sensing device. In the embodiment of the present disclosure, a suspension travel change value for the front axle of the vehicle caused by a scenario can be determined by the suspension height sensor. Considering vehicles equipped with air springs, the suspension is adjusted to different initial heights H₀ under a normal road surface condition in a case where different height modes of the air spring are selected. In a case where the vehicle travels over a pulse excitation scenario, the actual suspension travel change value H_{d} of the suspension caused by the scenario is determined as a difference between a real-time suspension height H and the suspension initial height H₀ under different air spring modes. In addition, an unsprung mass acceleration for the unsprung mass structural member can be acquired by the vehicle body acceleration sensing device.

In another embodiment of the present disclosure, the actual suspension travel change value and the unsprung mass acceleration can be determined merely through the vehicle body acceleration sensing device.

In an example, the real-time suspension response information includes an original sprung mass acceleration and an original unsprung mass acceleration acquired by the vehicle body acceleration sensing device. The domain controller can be configured to:
determine a sprung mass acceleration according to the original sprung mass acceleration, a preset factor parameter, and a preset offset;
determine an unsprung mass acceleration according to the original unsprung mass acceleration, a preset factor parameter, and a preset offset;
calculate sprung mass displacement data for the sprung mass based on the sprung mass acceleration;
calculate unsprung mass displacement data for the unsprung mass based on the unsprung mass acceleration; and
calculate suspension deformation displacement for the electronically controlled shock absorber having continuously-adjustable damping according to the sprung mass displacement data and the unsprung mass displacement data.

In practical applications, the original sprung mass acceleration and the original unsprung mass acceleration acquired by the domain controller are measured values of physical quantities, representing raw data that cannot be used directly. Therefore, before calculating a target damping value for the variable damping shock absorber, the raw data needs to be converted into standard units according to the preset factor parameter factor. In an example, after converting the original sprung mass acceleration and the original unsprung mass acceleration into standard units, it is also possible to verify whether the processed sprung mass acceleration and unsprung mass acceleration are within a reasonable preset range. In a case of exceeding the reasonable preset range, the preset factor parameter factor can be readjusted, or the data acquisition process can be checked for errors.

Determining the sprung mass acceleration according to the original sprung mass acceleration, the preset factor parameter, and the preset offset can be implemented by Formula 1:

Formula 1: $ProcessedData = PreData ⋅ factor + offset$
where ProcessedData represents the sprung mass acceleration, PreData represents the original sprung mass acceleration, factor represents the preset factor parameter, and offset represents the preset offset.

Determining the unsprung mass acceleration according to the original unsprung mass acceleration, the preset factor parameter, and the preset offset can be implemented by Formula 2:

Formula 2: $ProcessedData = PreData ⋅ factor + offset$
where ProcessedData represents the unsprung mass acceleration, PreData represents the original unsprung mass acceleration, factor represents the preset factor parameter, and offset represents the preset offset.

The actual suspension travel change value can be calculated according to Formula 3:
Formula 3: ${Z}_{def} = Z - {Z}_{t}$
where Z represents the sprung mass displacement data, and Zₜ represents the unsprung mass displacement data.

The actual suspension travel change value and the unsprung mass acceleration are determined as the real-time suspension response information, and the real-time suspension response information is transmitted to the domain controller.

In the embodiment of the present disclosure, the actual suspension travel change value for the electronically controlled shock absorber having continuously-adjustable damping is acquired through the suspension height sensor; the unsprung mass acceleration for the sprung mass structural member is acquired through the vehicle body acceleration sensing device; and the actual suspension travel change value and the unsprung mass acceleration are determined as the real-time suspension response information, and the real-time suspension response information is transmitted to the domain controller. In this way, the acquisition efficiency for the actual suspension travel change value and the unsprung mass acceleration is improved.

In an embodiment of the present disclosure, determining the pulse excitation scenario for the pulse excitation condition in a case where the current traveling condition of the vehicle is determined to be the pulse excitation condition based on the real-time suspension response information includes:
determining the pulse excitation scenario for the pulse excitation condition, in a case where the domain controller determines that the unsprung mass acceleration is greater than a preset unsprung mass acceleration characteristic threshold, and that an absolute value of the actual suspension travel change value is greater than a preset suspension height characteristic threshold within a preset time threshold range.

In an implementation, in a case where the vehicle enters the pulse excitation scenario, the absolute value of the actual suspension travel change value reaches a maximum in a case where the vehicle passes over a crest or a trough, and the unsprung mass acceleration reaches a maximum at a second peak. Therefore, signal identification can be performed collaboratively according to both the actual suspension travel change value and the unsprung mass acceleration.

The unsprung mass acceleration and the actual suspension travel change value do not reach respective characteristic thresholds simultaneously in a case where the vehicle travels over a pulse excitation road segment. Therefore, the current traveling condition of the vehicle can be determined as the pulse excitation condition in a case where the unsprung mass acceleration is greater than the preset unsprung mass acceleration characteristic threshold and the absolute value of the actual suspension travel change value is greater than the preset suspension height characteristic threshold within the preset time threshold range, thereby initiating automatic identification of the pulse excitation scenario. The preset suspension height characteristic threshold can be determined based on vehicle speed and the air spring height mode.

In the embodiment of the present disclosure, in a case where the domain controller determines that the unsprung mass acceleration is greater than the preset unsprung mass acceleration characteristic threshold and the absolute value of the actual suspension travel change value is greater than the preset suspension height characteristic threshold within the preset time threshold range, the pulse excitation scenario for the pulse excitation condition is determined, thereby enabling intervention control of the shock absorber under reasonable conditions and further improving the control efficiency for the shock absorber.

In an embodiment of the present disclosure, the pulse excitation scenario includes a vehicle front axle incline traveling phase, a vehicle front axle residual vibration phase, a vehicle rear axle incline traveling phase, and a vehicle rear axle residual vibration phase; and determining the damping control mode of the electronically controlled shock absorber having continuously-adjustable damping in the pulse excitation scenario includes:
determining a first target damping control mode of the electronically controlled shock absorber having continuously-adjustable damping in the vehicle front axle incline traveling phase;
determining a second target damping control mode of the electronically controlled shock absorber having continuously-adjustable damping in the vehicle front axle residual vibration phase;
determining a third target damping control mode of the electronically controlled shock absorber having continuously-adjustable damping in the vehicle rear axle incline traveling phase; and
determining a fourth target damping control mode of the electronically controlled shock absorber having continuously-adjustable damping in the vehicle rear axle residual vibration phase.

In the embodiment of the present disclosure, the pulse excitation scenario can be decomposed into phases, segmenting the vehicle travel process into the vehicle front axle incline traveling phase, the vehicle front axle residual vibration phase, the vehicle rear axle incline traveling phase, and the vehicle rear axle residual vibration phase. Different control strategies are executed for different phases to achieve efficient control of the shock absorber.

In an embodiment of the present disclosure, determining the first target damping control mode of the electronically controlled shock absorber having continuously-adjustable damping in the vehicle front axle incline traveling phase includes:
acquiring a first target moment at which a front axle of the vehicle enters the vehicle front axle incline traveling phase, and a second target moment at which the vehicle is identified as being in the vehicle front axle incline traveling phase; and
determining the first target damping control mode as a normal road surface damping mode for both the front axle and a rear axle of the vehicle from the first target moment to the second target moment.

The vehicle front axle incline traveling phase is defined as an interval from when the vehicle enters the pulse excitation scenario to when the pulse excitation scenario is identified based on the actual suspension travel change value and the unsprung mass acceleration. Whether the vehicle enters a bump scenario is determined in the following manner: confirming whether a current moment is a pulse excitation entry moment t₀ by identifying a triggering moment based on a variation characteristic of the unsprung mass acceleration value changing from a non-integer at a previous moment to an integer at the current moment and by determining whether the pulse excitation scenario is identified within a predetermined time period.

In an implementation, the embodiment of the present disclosure can record a time length tₚ from the triggering moment (the first target moment) t₀ to the moment t₁ when the front axle automatically identifies the pulse excitation scenario (the second target moment), and record real-time data such as vehicle speed and front axle shock absorber velocity within a time period from t₀ to t₁.

In a case where the vehicle is at the crest when the front axle has automatically identified the pulse excitation scenario, the first target damping control mode is determined as the normal road surface damping mode for both the front axle and the rear axle of the vehicle throughout the time period from the triggering moment t₀ to the moment t₁ when the front axle has automatically identified the pulse excitation scenario. This example is provided for illustration purposes merely. The same manner can be applied to a pit scenario.

In an embodiment of the present disclosure, determining the second target damping control mode of the electronically controlled shock absorber having continuously-adjustable damping in the vehicle front axle residual vibration phase includes:
acquiring a second target moment at which the vehicle is identified as being in the vehicle front axle incline traveling phase; and
determining the second target damping control mode as a hard damping mode for the front axle of the vehicle and an auxiliary damping mode for the rear axle of the vehicle from the second target moment.

In an implementation, after the front axle has automatically identified the pulse excitation scenario at moment t₁, the vehicle enters the vehicle front axle residual vibration phase. During this phase, the front axle is in the hard damping mode, and a damping coefficient in the hard damping mode can be obtained from a lookup table based on the shock absorber velocity and the vehicle speed. The rear axle operates in the auxiliary damping mode.

In an embodiment of the present disclosure, determining the third target damping control mode of the electronically controlled shock absorber having continuously-adjustable damping in the vehicle rear axle incline traveling phase includes:
acquiring a first target moment at which a front axle of the vehicle enters the vehicle front axle incline traveling phase;
acquiring vehicle traveling state information of the vehicle from the first target moment as a starting point;
determining a first travel distance of the vehicle from the first target moment based on the vehicle traveling state information; and
determining the third target damping control mode as a soft damping mode for the rear axle of the vehicle, in a case where a difference between the first travel distance and a wheelbase of the vehicle is less than a preset distance threshold.

In an implementation, a vehicle state acquisition module of the embodiment of the present disclosure is configured to acquire the vehicle traveling state information such as real-time vehicle speed, brake status, longitudinal acceleration, lateral acceleration, and steering wheel angle.

A speed integration method is a method for calculating distance by integrating velocity values, commonly applied to measuring vehicle travel distance. The basic principle is as follows:
over a short period, acceleration can be considered constant, and the distance equals velocity multiplied by time. Therefore, the distance can be calculated using the speed integration method by performing the following steps: acquiring an instantaneous vehicle speed, multiplying the instantaneous vehicle speed by a time interval to obtain a travel distance within the time interval, and summing all travel distances over all time intervals to obtain a total travel distance.

The benefits of the speed integration method include a simple structure, ease of implementation, and relatively high measurement accuracy which is not affected by factors such as wheel slip.

The embodiment of the present disclosure can calculate the distance by using the speed integration method. In a case where the cumulative vehicle distance is greater than a configurable distance reset threshold, a reset operation is triggered to prevent data overflow.

After determining the first travel distance of the vehicle from the first target moment using the speed integration method based on the vehicle speed information in the vehicle traveling state information, in a case where the difference between the first travel distance and the wheelbase of the vehicle is less than a preset distance threshold, the rear axle is determined to be about to enter the pulse excitation road and enters the vehicle rear axle residual vibration phase. During this phase, the rear axle shock absorber is controlled in the soft damping mode, and a damping coefficient in the soft damping mode can be determined from a lookup table based on the shock absorber velocity and the vehicle speed corresponding to a front axle climbing phase (or a downhill phase for pit scenarios).

In an embodiment of the present disclosure, determining the fourth target damping control mode of the electronically controlled shock absorber having continuously-adjustable damping in the vehicle rear axle residual vibration phase includes:
acquiring a second target moment at which the vehicle is identified as being in the vehicle front axle incline traveling phase;
determining a second travel distance of the vehicle from the first target moment to the second target moment based on the vehicle traveling state information;
determining a developed length of a pulse excitation profile through the second travel distance;
determining a third travel distance of the vehicle based on the vehicle traveling state information, in a case where the difference between the first travel distance and the wheelbase of the vehicle is less than a preset distance threshold; and
determining the fourth target damping control mode as a hard damping mode for the rear axle of the vehicle, in a case where the third travel distance is equal to a preset ratio of the developed length of the pulse excitation profile.

In an implementation, the embodiment of the present disclosure can, based on the vehicle speed information in the vehicle traveling state information and using the speed integration method, calculate the second travel distance traveled by the vehicle during the climbing process from the pulse excitation entry moment t₀ to the moment t₁ when the pulse excitation scenario is identified. The inventors of the present disclosure have found that the second travel distance corresponds to 0.5 times the developed length of the pulse excitation profile, thereby determining the developed length of the pulse excitation profile.

In a case where the difference between the first travel distance and the wheelbase of the vehicle is less than the preset distance threshold, the vehicle is determined to enter the vehicle rear axle incline traveling phase. In this case, the embodiment of the present disclosure can calculate the third travel distance of the vehicle using the speed integration method based on the vehicle speed information in the vehicle traveling state information.

In a case where the third travel distance reaches the developed length of the pulse excitation profile, the fourth target damping control mode is determined as the hard damping mode for the rear axle of the vehicle. For example, after entering a vehicle rear axle climbing phase, in a case where the vehicle continues to travel to a distance equal to one-half of the developed length of the pulse excitation profile, the vehicle enters the vehicle rear axle residual vibration phase, the rear axle enters a residual vibration hard damping state, and the front axle adopts an auxiliary hard damping strategy. The respective damping coefficients of the front and rear axles can be determined from different mapping tables based on the shock absorber velocity and the vehicle speed.

In an embodiment of the present disclosure, the method further includes:
acquiring an activation duration of the rear axle of the vehicle in the hard damping mode; and
determining the damping control mode of the electronically controlled shock absorber having continuously-adjustable damping as the normal road surface damping mode for both the front axle and the rear axle of the vehicle, in a case where the activation duration exceeds a preset duration threshold.

In an implementation, in a case where the activation duration of the rear axle in the residual vibration hard damping state and the front axle in the auxiliary hard damping state exceeds the preset duration threshold, the vehicle is determined to be in the normal traveling condition. In this case, the damping control mode of the electronically controlled shock absorber having continuously-adjustable damping can be set to the normal road surface damping mode for both the front axle and the rear axle of the vehicle, thereby balancing vehicle ride comfort and handling performance.

In an embodiment of the present disclosure, the actual suspension travel change value for the electronically controlled shock absorber having continuously-adjustable damping for a single-side wheel is acquired through the suspension height sensor, and the unsprung mass acceleration of the unsprung mass structural member for the single-side wheel is acquired through the vehicle body acceleration sensing device.

In an implementation, considering that merely one wheel of the front axle may enter a raised road surface scenario, the steps of determining the pulse excitation scenario corresponding to the pulse excitation condition and determining the damping control mode of the electronically controlled shock absorber having continuously-adjustable damping in the pulse excitation scenario can be performed separately for the left and right wheels, thereby achieving individual control of the damping of the left and right wheels. When the function switch is enabled, in a case where merely a wheel on one side has identified the pulse excitation scenario, the wheel on this side executes the self-control logic corresponding to this side, and a wheel on the opposite side executes a control logic corresponding to the opposite side. In a case where coaxial damping control is enabled and two sides of damping control are activated, wheels at two sides execute the self-control logic corresponding to respective side, and the self-control logic has priority. In a case where the coaxial damping control is not enabled, the damping on the side that identifies the pulse excitation scenario executes self-control, and the damping on the side not enabled for pulse excitation does not execute control.

To enable those skilled in the art to better understand the present disclosure, the following provides an example illustrating the embodiments of the present disclosure.

An example is provided for damping control of a semi-active shock absorber under a raised surface scenario. The steps are as follows:
(1) During normal traveling of the vehicle, the suspension control mode is set to the normal road surface mode, balancing vehicle ride comfort and handling stability.
(2) In a case where an emergency steering, excessive longitudinal acceleration (emergency braking), excessive lateral acceleration, or excessive vehicle speed occurs, the damping adjustment function under the raised surface scenario is suppressed to ensure vehicle handling stability.
(3) Under braking conditions, vehicle braking is determined based on longitudinal deceleration and real-time brake cylinder pressure. In a case where deceleration occurs, the damping mode switches from the normal road surface mode to a braking pitch suppression mode. During braking, coordinated control of vertical and pitch degrees of freedom is performed using the vehicle body vertical attitude minima and pitch attitude around the Y-axis minima as control targets. In a case where the braking does not occur, the vehicle remains in the normal traveling mode.

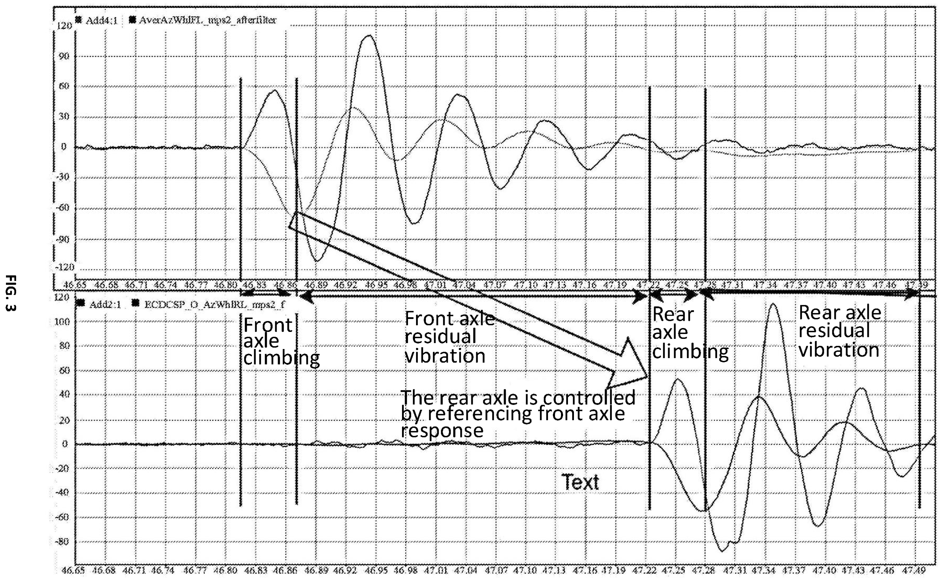

Referring to FIG. 3, FIG. 3 is a diagram illustrating segmented phases during vehicle travel according to an embodiment of the present disclosure.

(4) Under the pulse excitation conditions, in addition to operating in the normal road surface mode, the vehicle travel is divided into a vehicle front axle climbing phase (for a pit scenario, a descending phase), a vehicle front axle residual vibration phase, a vehicle rear axle climbing phase, and a vehicle rear axle residual vibration phase.

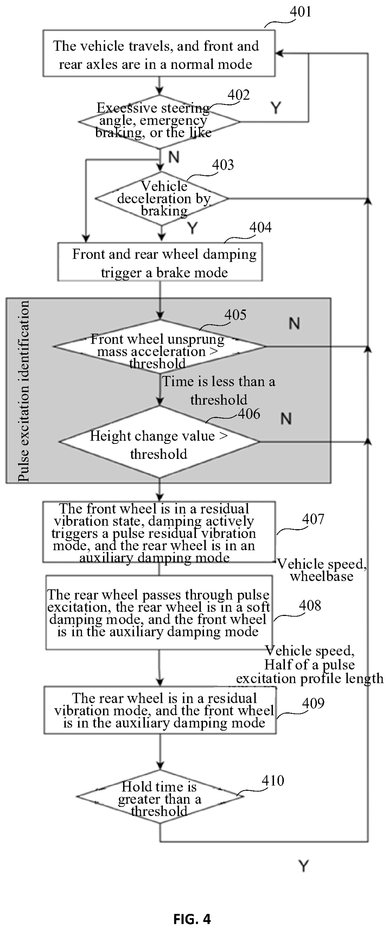

Referring to FIG. 4, FIG. 4 is a flowchart illustrating a method for controlling a vehicle according to an embodiment of the present disclosure. As shown in FIG. 4, the method for controlling the vehicle includes steps S401 to S410.

In step S401, the front and rear axles of the vehicle operate in the normal mode.

In step S402, whether the vehicle steering angle is large and emergency braking occurs are determined. In a case where the steering angle is large or the emergency braking occurs, step S401 is repeated; otherwise, step S403 or S404 is executed.

In step S403, it is determined whether vehicle braking deceleration occurs. In a case where the braking deceleration occurs, step S404 is executed; otherwise, step S401 is repeated.

In step S404, damping of the front and rear wheels is triggered to the braking mode.

After step S404, the vehicle enters a pulse excitation identification phase.
1) Pulse excitation identification: During vehicle traveling, data of a height sensor and a vehicle body acceleration sensor configured in the actual vehicle are acquired by the domain controller in real time, the acquired data are processed to obtain unsprung mass acceleration. In combination with the air spring mode selection, the pulse excitation scenario is automatically identified based on the actual suspension travel change value caused by the pulse excitation scenario while the front axle enters the pulse excitation scenario and the real-time response characteristics of the unsprung mass acceleration, and the moment when the vehicle enters the pulse excitation scenario is identified.

The pulse excitation identification phase includes steps S405 and 5406.

In step S405, it is determined whether the unsprung mass acceleration of the front wheel is greater than a threshold. The threshold refers to a preset unsprung mass acceleration characteristic threshold. Step S406 is executed in a case where the unsprung mass acceleration of the front wheel is greater than the threshold and the time is less than a threshold (for example, a preset time threshold); otherwise, the process returns to step S401.

In step S406, it is determined whether the height change value is greater than a threshold. The threshold refers to a preset suspension height characteristic threshold. Step S407 is executed in a case where the height change value is greater than the threshold; otherwise, the process returns to step S401.

In step S407, front wheel residual vibration occurs, the damping actively triggers a pulse residual vibration mode, and the rear axle is in the auxiliary damping mode.

In step S408, the rear wheel passes through the pulse excitation, the rear wheel operates in the soft damping mode, and the front wheel operates in the auxiliary damping mode.

In step S409, the rear wheel operates in the residual vibration mode, and the front axle operates in the auxiliary damping mode.

In step S410, the hold time is greater than a threshold. The process returns to step S401 in a case where the hold time is greater than the threshold.

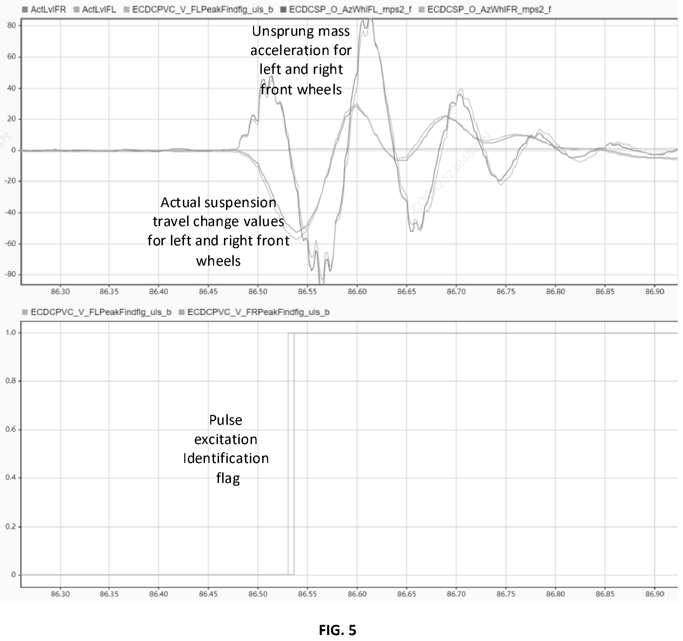

Referring to FIG. 5, FIG. 5 is a schematic diagram of a pulse excitation scenario identification flag according to an embodiment of the present disclosure.

Taking an air spring motion mode as an example, the initial suspension height in the normal road surface scenario under the air spring motion mode is -25 mm. In a case where the front axle enters the pulse excitation scenario, the actual suspension travel change value caused by the pulse excitation scenario and the unsprung mass acceleration are shown in FIG. 5. The unsprung mass acceleration characteristic threshold is set as 80 m²/s. Within a 0.1 s time threshold, the absolute value of the actual suspension travel change value (suspension deformation displacement) is greater than the suspension height characteristic threshold of 50 mm, and the pulse excitation scenario is identified, the flag is set to true. As shown in FIG. 3, the pulse identification moment corresponds to the state when the suspension is compressed to the maximum as the vehicle climbs the crest.

The triggering moment is identified based on the variation characteristics of the unsprung mass acceleration value when the vehicle enters the pulse excitation scenario and the pulse identification flag, as shown in FIG. 3.

The distance traveled during the vehicle climbing process is calculated as 0.4 m, and the developed length of the pulse excitation profile is determined to be 0.8 m.

### (4) Damping control

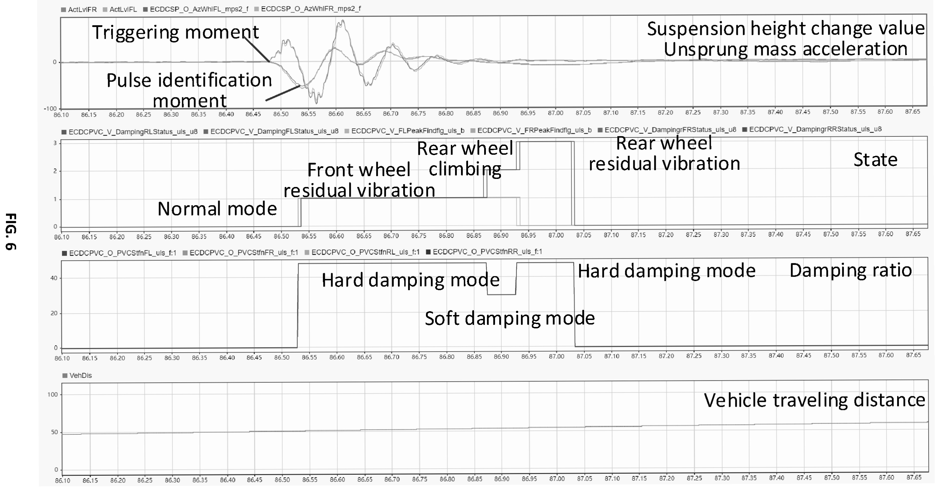

Referring to FIG. 4 and FIG. 6, FIG. 4 is a schematic flowchart of a method for controlling a vehicle according to an embodiment of the present disclosure; and FIG. 6 is a diagram illustrating moments of the vehicle traveling over an excitation road surface and triggering of shock absorber modes according to an embodiment of the present disclosure.

In a case where the vehicle is at the crest while the front axle has automatically identified the pulse excitation scenario, both the front axle and the rear axle operate in the normal road surface damping mode during the time period from the triggering moment t₀ to the moment t₁ when the front axle has automatically identified the pulse excitation scenario.

After the front axle has automatically identified the pulse excitation scenario, the vehicle enters the vehicle front axle residual vibration phase. During this phase, the front axle operates in the hard damping mode, and the damping is determined based on lookup tables according to the shock absorber velocity and the vehicle speed. The damping of the rear axle is in the auxiliary damping state.

In a case where the distance traveled by the vehicle after the front wheels enter the pulse excitation scenario minus the wheelbase (3.1 m) is less than a threshold (0.5 m), the rear axle is about to enter the pulse excitation road surface, entering the vehicle rear axle climbing phase. After traveling an additional 0.4 m corresponding to the developed length of the pulse excitation profile, the rear axle enters the residual vibration phase.

During the vehicle rear axle climbing phase, the rear axle shock absorber is controlled in the soft damping mode. The soft damping value is mapped according to the shock absorber velocity and the vehicle speed corresponding to the vehicle front axle climbing phase (for a pit scenario, a descending phase). The soft damping mode lasts while the rear axle wheel travels 0.4 m. The rear axle then enters the residual vibration hard damping state, and exits to the normal road surface state after a preset hold time threshold. During the rear axle climbing process, in a case where the front axle damping is in the auxiliary soft damping state and the rear axle is in the residual vibration state, the front axle adopts a strategy of the auxiliary hard damping. Damping of both axles is determined separately according to respective shock absorber velocity and vehicle speed using different mapping tables.

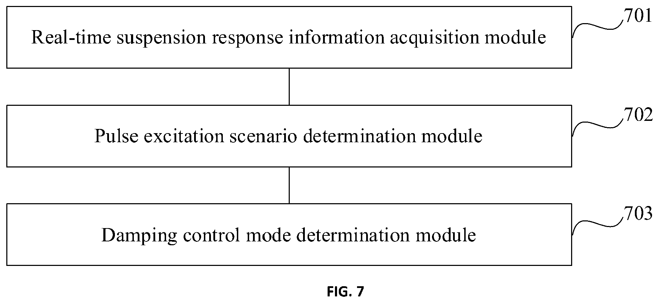

FIG. 7 is a block diagram of a structure of a device for controlling a vehicle according to an embodiment of the present disclosure. The device for controlling the vehicle can include:
a real-time suspension response information acquisition module 701 configured to acquire real-time suspension response information of the vehicle;
a pulse excitation scenario determination module 702 configured to determine a pulse excitation scenario for a pulse excitation condition in a case where a current traveling condition of the vehicle is determined to be the pulse excitation condition based on the real-time suspension response information; and
a damping control mode determination module 703 configured to determine a damping control mode of an electronically controlled shock absorber having continuously-adjustable damping in the pulse excitation scenario, and to control the electronically controlled shock absorber having continuously-adjustable damping through the damping control mode.

For the device embodiment, because the device embodiment is substantially similar to the method embodiment, the description is comparatively simple, and reference can be made to the relevant portions of the method embodiment.

The above embodiments are merely exemplary to fully illustrate the present disclosure, and the scope of the present disclosure is not limited thereto. Equivalent substitutions or modifications made by those skilled in the art based on the present disclosure are all within the scope of the present disclosure.

## Claims

1. A method for controlling a vehicle, wherein the vehicle is equipped with an electronically controlled shock absorber having continuously-adjustable damping, and the method comprises:
acquiring real-time suspension response information for a suspension of the vehicle;
determining a pulse excitation scenario for a pulse excitation condition in a case where a current traveling condition of the vehicle is determined to be the pulse excitation condition based on the real-time suspension response information; and
determining a damping control mode of the electronically controlled shock absorber having continuously-adjustable damping in the pulse excitation scenario, and controlling the electronically controlled shock absorber having continuously-adjustable damping through the damping control mode.

2. The method according to claim 1, wherein the vehicle is equipped with a vehicle self-perception system and a domain controller, the vehicle self-perception system comprises a suspension height sensor and a vehicle body acceleration sensing device, the electronically controlled shock absorber having continuously-adjustable damping comprises an unsprung mass structural member; and acquiring the real-time suspension response information for the suspension of the vehicle comprises:
acquiring an actual suspension travel change value for the electronically controlled shock absorber having continuously-adjustable damping through the suspension height sensor;
acquiring an unsprung mass acceleration of the unsprung mass structural member through the vehicle body acceleration sensing device; and
determining the actual suspension travel change value and the unsprung mass acceleration as the real-time suspension response information, and transmitting the real-time suspension response information to the domain controller.

3. The method according to claim 2, wherein determining the pulse excitation scenario for the pulse excitation condition in a case where the current traveling condition of the vehicle is determined to be the pulse excitation condition based on the real-time suspension response information comprises:
determining the pulse excitation scenario for the pulse excitation condition, in a case where the domain controller determines that the unsprung mass acceleration is greater than a preset unsprung mass acceleration characteristic threshold, and that an absolute value of the actual suspension travel change value is greater than a preset suspension height characteristic threshold within a preset time threshold range.

4. The method according to any one of claims 1-3, wherein the pulse excitation scenario comprises a vehicle front axle incline traveling phase, a vehicle front axle residual vibration phase, a vehicle rear axle incline traveling phase, and a vehicle rear axle residual vibration phase; and determining the damping control mode of the electronically controlled shock absorber having continuously-adjustable damping in the pulse excitation scenario comprises:
determining a first target damping control mode of the electronically controlled shock absorber having continuously-adjustable damping in the vehicle front axle incline traveling phase;
determining a second target damping control mode of the electronically controlled shock absorber having continuously-adjustable damping in the vehicle front axle residual vibration phase;
determining a third target damping control mode of the electronically controlled shock absorber having continuously-adjustable damping in the vehicle rear axle incline traveling phase; and
determining a fourth target damping control mode of the electronically controlled shock absorber having continuously-adjustable damping in the vehicle rear axle residual vibration phase.

5. The method according to claim 4, wherein determining the first target damping control mode of the electronically controlled shock absorber having continuously-adjustable damping in the vehicle front axle incline traveling phase comprises:
acquiring a first target moment at which a front axle of the vehicle enters the vehicle front axle incline traveling phase, and a second target moment at which the vehicle is identified as being in the vehicle front axle incline traveling phase; and
determining the first target damping control mode as a normal road surface damping mode for both the front axle and a rear axle of the vehicle from the first target moment to the second target moment.

6. The method according to claim 4 or 5, wherein determining the second target damping control mode of the electronically controlled shock absorber having continuously-adjustable damping in the vehicle front axle residual vibration phase comprises:
acquiring a second target moment at which the vehicle is identified as being in the vehicle front axle incline traveling phase; and
determining the second target damping control mode as a hard damping mode for a front axle of the vehicle and an auxiliary damping mode for a rear axle of the vehicle from the second target moment.

7. The method according to any one of claims 4-6, wherein determining the third target damping control mode of the electronically controlled shock absorber having continuously-adjustable damping in the vehicle rear axle incline traveling phase comprises:
acquiring a first target moment at which a front axle of the vehicle enters the vehicle front axle incline traveling phase;
acquiring vehicle traveling state information of the vehicle from the first target moment as a starting point;
determining a first travel distance of the vehicle from the first target moment based on the vehicle traveling state information; and
determining the third target damping control mode as a soft damping mode for a rear axle of the vehicle in a case where a difference between the first travel distance and a wheelbase of the vehicle is less than a preset distance threshold.

8. The method according to claim 7, wherein determining the fourth target damping control mode of the electronically controlled shock absorber having continuously-adjustable damping in the vehicle rear axle residual vibration phase comprises:
acquiring a second target moment at which the vehicle is identified as being in the vehicle front axle incline traveling phase;
determining a second travel distance of the vehicle from the first target moment to the second target moment based on the vehicle traveling state information;
determining a developed length of a pulse excitation profile through the second travel distance;
determining a third travel distance of the vehicle based on the vehicle traveling state information in a case where the difference between the first travel distance and the wheelbase of the vehicle is less than the preset distance threshold; and
determining the fourth target damping control mode as a hard damping mode for the rear axle of the vehicle in a case where the third travel distance is equal to a preset ratio of the developed length of the pulse excitation profile.

9. The method according to any one of claims 4-8, further comprising:
acquiring an activation duration of a rear axle of the vehicle in a hard damping mode; and
determining the damping control mode of the electronically controlled shock absorber having continuously-adjustable damping as a normal road surface damping mode for both a front axle and the rear axle of the vehicle, in a case where the activation duration exceeds a preset duration threshold.

10. A device for controlling a vehicle, wherein the vehicle is equipped with an electronically controlled shock absorber having continuously-adjustable damping, and the device comprises:
a real-time suspension response information acquisition module configured to acquire real-time suspension response information for a suspension of the vehicle;
a pulse excitation scenario determination module configured to determine a pulse excitation scenario for a pulse excitation condition in a case where a current traveling condition of the vehicle is determined to be the pulse excitation condition based on the real-time suspension response information; and
a damping control mode determination module configured to determine a damping control mode of the electronically controlled shock absorber having continuously-adjustable damping in the pulse excitation scenario, and to control the electronically controlled shock absorber having continuously-adjustable damping through the damping control mode.

11. A vehicle, comprising:
one or more processors; and
one or more machine-readable media storing instructions thereon, wherein the instructions, when executed by the one or more processors, cause the vehicle to perform the method according to any one of claims 1-9.

12. A computer-readable storage medium storing instructions thereon, wherein the instructions, when executed by one or more processors, cause the processors to perform the method according to any one of claims 1-9.
